Europäisches Patentamt

**European Patent Office**

Office européen des brevets

(11) Numéro de publication: **0 054 502**
**B1**

(12) **FASCICULE DE BREVET EUROPEEN**

(45) Date de publication du fascicule du brevet.
06.03.85

(21) Numéro de dépôt: **81420180.2**

(22) Date de dépôt: **04.12.81**

(51) Int. Cl.⁴: **B 04 B 9/12**

(54) **Dispositif de palier pour centrifugeuse.**

(30) Priorité: **05.12.80 FR 8026151**

(43) Date de publication de la demande:
**23.06.82 Bulletin 82/25**

(45) Mention de la délivrance du brevet:
**06.03.85 Bulletin 85/10**

(84) Etats contractants désignés:
**BE CH DE GB IT LI NL SE**

(56) Documents cités:
**DE - A - 2 718 861**
**FR - A - 2 263 314**
**GB - A - 627 166**
**US - A - 2 015 784**

(73) Titulaire: **ROBATEL S.L.P.I. Société Anonyme, Route de Genève, F-69740 Genas (FR)**

(72) Inventeur: **Buffet, Denis, 23 Rue du Besly Résidence les Thibaudières, 91800 Boussy Saint Antoine (FR)**

(74) Mandataire: **Monnier, Joseph et al, Cabinet Monnier 142-150, Cours Lafayette, F-69003 Lyon (FR)**

## Description

La présente invention a trait aux centrifugeuses à grande vitesse et plus particulièrement à celles à axe vertical.

Les arbres de ces machines sont soumis à des efforts considérables du fait des irrégularités inévitables de la répartition des dépôts solides à l'intérieur du bol ou panier et des accélérations centrifuges très importantes mises en jeu. Par ailleurs les grandes vitesses de rotation qui leur sont imparties exigent des paliers de construction extrêmement précise. Il devient alors très difficile à réaliser un montage, ou comme on le dit dans la technique, une pivoterie, qui puisse encaisser ces efforts tout en tenant compte des inévitables flexions de l'arbre ainsi que des différences de dilation thermique des diverses pièces, et sans gêner une lubrification parfaite des roulements.

La présente invention vise à permettre de réaliser un tel dispositif de palier ou de pivoterie qui satisfasse mieux qu'on ne l'a fait jusqu'ici aux diverses conditions que posent ainsi les centrifugeuses à grande vitesse.

Le brevet GB-A-627 166 décrit une tête de support pour centrifugeuse suspendue, dans laquelle l'arbre de la machine traverse avec un faible jeu un manchon cylindrique angulairement fixe, supporté par une rotule creuse qui forme chambre à huile supérieure renfermant le joint d'accouplement de cet arbre avec celui du moteur d'entraînement. Au-dessous de ce manchon l'arbre est solidaire du fond d'une douille tournante qui s'élève autour dudit manchon en ménageant par rapport à celui-ci un espace annulaire propre à constituer une chambre à huile inférieure. Entre le manchon et la douille sont interposés deux groupes de roulements espacés axialement l'un de l'autre et par l'intermédiaire desquels l'arbre est ainsi supporté à rotation. Aucun système élastique n'est interposé ni entre la douille et les roulements, ni entre ceux-ci et le manchon, de sorte que les deux groupes précités ne sont nullement indépendants l'un de l'autre. Des moyens sont prévus pour que l'huile déversée en excès dans la chambre supérieure s'écoule par gravité dans la chambre inférieure, mais en service normal cette huile ne circule pas entre les deux chambres.

Dans le brevet français FR-A-2 263 314 une broche de filature portant un manchon propre à constituer poulie d'entraînement est supportée par deux paliers à roulement disposés de part et d'autre de celui-ci et chacun de ces paliers est monté élastiquement de façon individuelle dans une enveloppe formant bâti porteur commun pour les deux paliers. Il n'est toutefois prévu aucun système de chambre à huile pour l'un ni pour l'autre de ceux-ci.

L'invention concerne un dispositif pour supporter à rotation l'arbre d'une centrifugeuse, du genre comprenant deux roulements ou groupes de roulements situés à une certaine distance axiale l'un de l'autre, chacun étant monté rigidement dans un corps élémentaire non tournant relié au bâti fixe de la machine, tandis qu'il est ménagé entre ces deux roulements ou groupes de roulements un espace annulaire propre à former chambre à huile, cette chambre étant délimitée extérieurement par une paroi substantiellement cylindrique aux extrémités de laquelle sont montés lesdits roulements ou groupes de roulements. Le dispositif est caractérisé en ce que les deux corps élémentaires dans lesquels sont ainsi montés les roulements ou groupes de roulements sont indépendants l'un de l'autre et chacun d'eux comporte un prolongement tubulaire qui s'étend en direction de l'autre par une gaine déformable de façon à constituer la paroi extérieure fixe de la chambre à huile dont la paroi intérieure tournante est directement réalisée par la périphérie de l'arbre lui-même.

Le dessin annexé, donné à titre d'exemple, permettra de mieux comprendre l'invention, les caractéristiques qu'elle présente et les avantages qu'elle est susceptible de procurer:

Fig. 1 est une coupe axiale générale d'un dispositif de palier ou de pivoterie suivant l'invention.

Fig. 2 reproduit à plus grande échelle les détails des corps élémentaires supérieur et inférieur.

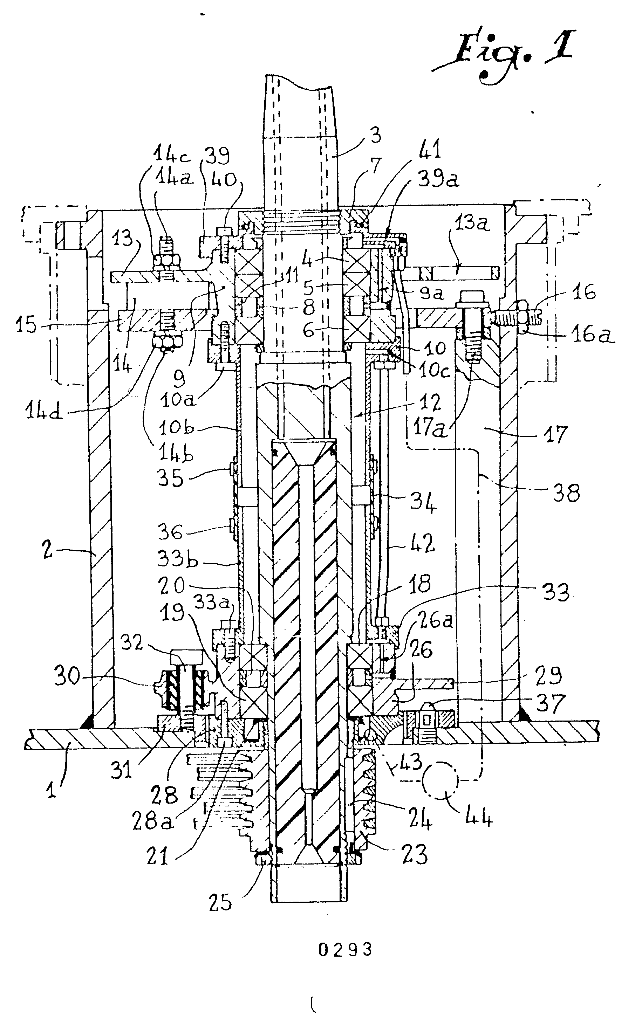

L'ensemble représenté en coupe en fig. 1 correspond à la partie centrale du bâti d'une centrifugeuse dans laquelle est monté à rotation l'arbre vertical qui supporte l'équipage tournant de la machine. Dans le cas de fig. 1, il s'agit d'une centrifugeuse à bol ouvrable en marche, entraînée à très grande vitesse.

Sur une plaque d'embase 1 de ce bâti est fixé par soudure un manchon vertical 2 propre à supporter l'ensemble de la pivoterie. Dans l'axe de ce manchon est disposé l'arbre 3 de la centrifugeuse.

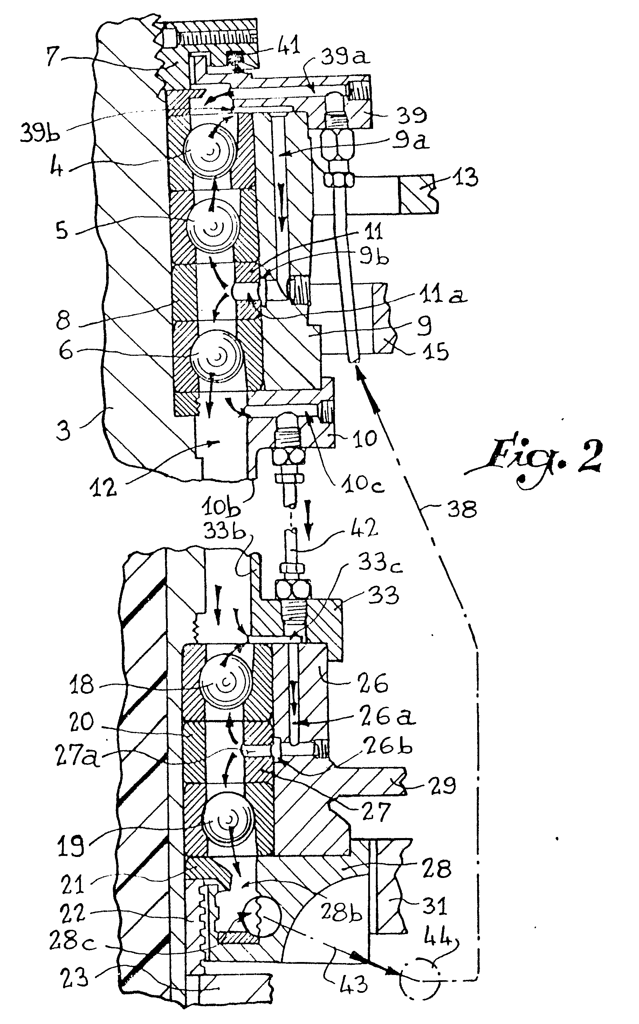

Dans la partie haute du manchon cet arbre est supporté et centré par trois roulements 4, 5, 6 dont on aperçoit le détail en fig. 2. Il s'agit de roulements de précision prévus pour supporter une charge axiale de façon unidirectionnelle. Ils sont orientés pour encaisser les deux premiers les efforts verticaux dirigés vers le bas et le troisième 6 ceux dirigés vers le haut. Leur ensemble est serré sur l'arbre par une bague filetée 7 avec interposition d'une entretoise annulaire 8. Par ailleurs ils sont extérieurement montés à coulissement dans un corps cylindrique élémentaire 9.

Ce dernier comporte à son extrémité inférieure une bride 10 rapportée par des vis 10a et qui dépasse intérieurement de façon à forme appui pour les bagues extérieures des roulements. On notera qu'entre celles de ces bagues qui correspondant aux roulements 5 et 6 est interposée une entretoise annulaire 11 comportant une largeur qui, au réglage des jeux axiaux près, est identique à celle de l'entretoise intérieure 8 précitée.

La bride 10 est solidaire d'un prolongement tubulaire 10b qui s'étend en direction du bas sur une certaine longueur autour de l'arbre 3, mais à un écartement notable de la périphérie de celui-ci, en ménageant ainsi un espace intermédiaire 12.

Le corps élémentaire 9 est solidaire d'une couronne 13 de diamètre extérieur nettement inférieur à celui intérieur du manchon 2 au même niveau, et cette couronne repose par l'intermédiaire de blocs 14 en caoutchouc ou analogue, sur une autre couronne 15 qui entoure avec jeu ledit corps 9. Comme montré, les blocs 14 comportent des goujons filetés 14a, 14b solidaires d'embases encastrées dans leur masse et que des écrous 14c, 14d fixent dans des perforations des couronnes 13 et 15 suivant une technique bien connue en soi dans d'autres applications. Il peut être prévu un nombre quelconque de ces blocs, par exemple trois.

La couronne 15, qui dispose d'un jeu appréciable dans le manchon 2, est centrée à l'intérieur de celui-ci par des vis de centrage radiales 16 avec contre-écrous 16a et elle repose sur la plaque d'embase 1 par l'intermédiaire de colonnes 17 dont elle est rendue solidaires par des vis 17a. Ces colonnes peuvent être angulairement réparties entre les blocs 14 successifs et la couronne 13 est perforée au-dessus de chacune d'elles, comme indiqué en 13a, pour permettre l'accès à la vis 17a correspondante.

On retrouve dans la partie basse du manchon 2 un agencement plus ou moins semblable à celui qu'on vient de décrire. L'arbre 3 porte deux roulements de précision 18, 19 prévus pour encaisser des efforts axiaux orientés vers le bas pour le premier, vers le haut pour le second, ces roulements étant montés sur l'arbre avec interposition d'une entretoise annulaire 20 et étant serrés en position par un empilage comprenant un joint 21 à lèvre déflectrice, un anneau d'espacement 22 à périphérie creusée de gorges pour former labyrinthe dans l'alésage de traversée de la plaque d'embase 1, le bord supérieur de cet anneau étant recouvert par la lèvre précitée, la poulie d'entraînement 23 à gorges multiples calée sur l'arbre par la clavette 24, et enfin la bague filetée 25 qui se visse sur cet arbre pour retenir le tout. Les bagues extérieures des roulements 18 et 19 sont logées dans un corps élémentaire cylindrique 26 avec interposition entre elles d'une entretoise annulaire 27 qui, sous réserve des mêmes remarques que pour les entretoises 8 et 11, comporte la même largeur que celle 20 précitée. Ce corps comporte une ride inférieure 28 rapportée par des vis telles que 28a et sur le bord intérieur dépassant de laquelle les bagues précitées viennent prendre appui. Le corps 26 est solidaire d'une couronne 29 que des blocs élastiques 30 relient à une couronne inférieure 31, laquelle repose sur la plaque 1 en comportant une partie inférieure à moindre rayon engagée dans l'alésage de traversée de ladite plaque pour assurer le centrage. Mais ici les blocs élastique 30 sont des manchons engagés dans des bossages cylindriques creux de la couronne 29 et traversés par des tiges 32 qui viennent se visser dans la couronne 31. On sait que de tels blocs assurent surtout l'élasticité dans le sens radial, mais qu'ils sont parfaitement capables d'encaisser des efforts axiaux. En outre, par mesure de sécurité l'on peut les monter à coulissement dans leurs logements, ce qui évite par ailleurs d'avoir à tenir des tolérances serrées.

Le corps 26 comporte une bride supérieure 33 fixée par des vis 33a et solidaire d'un prolongement tubulaire 33b de même diamètre intérieur et extérieur que le prolongement 10b précité, mais qui s'arrête à une certaine distance de l'extrémité inférieure de celui-ci pour lui être relié par une gaine 34 serrée en place par des colliers 35 et 36.

Il est à noter que la couronne 31 est préférablement fixée à la plaque d'embase 1 par le moyen de vis non représentées dont les têtes sont disposées en dessous de ladite plaque pour être aisément accessibles lors des démontages. Cette couronne est en outre centrée angulairement sur la plaque pour faciliter sa mise en place, par le moyen de pions tels que 37, à extrémité libre conique, qui dépassent de cette plaque et qui traversent avec un certain jeu des trous de la couronne. On comprend par ailleurs que la couronne 29 dispose d'un jeu notable par rapport aux bords intérieurs des colonnes 17 et que de même la bride 28 dispose d'un jeu important à l'intérieur de la couronne 31.

Dans ces conditions l'ensemble des deux corps élémentaires 9, 26, des prolongements 10b, 33b et de la gaine 34 constitue une sorte de boîtier de palier susceptible de fléchir transversalement à l'axe de l'arbre 3, de se contracter ou de s'allonger longitudinalement, voire de subir de légères torsions. Comme chaque corps élémentaire est monté élastiquement sur le bâti de façon individuelle, le palier complexe que se boîtier représente peut suivre sans réaction excessive toutes les déformations de l'arbre et/ou du bâti susceptibles de résulter des défauts d'équilibrage de la charge et des différences de dilatation thermique. Le fait que les corps 9 et 26 sont radialement et axialement solidaires de l'arbre 3 facilite considérablement l'établissement des joints d'étanchéité.

On notera encore que tout l'ensemble du boîtier de palier et de ses organes de montage élastique n'est maintenu à l'intérieur du manchon 2 que par les vis de centrage 16 et la couronne inférieure 31 centrée dans l'alésage de la plaque d'embase 1. Par conséquent, moyennant desserrage éventuel desdites vis 16 et enlèvement des vis de fixation de la couronne 31 à la plaque d'embase 1, cet ensemble peut s'enlever aisément pour vérifications, réparations ou échanges, les pions 37 facilitant considérablement la remise en place. Il est à noter à cet égard que le diamètre de la poulie 23 est inférieur à celui de l'ouverture de la plaque 1 de sorte que cette poulie peut rester en place sur l'arbre lors de l'enlèvement.

D'autre part, en dépit de sa déformabilité, à la flexion et dans le sens longitudinal, le boîtier de palier 9—10b—34—33b—26 peut être réalisé sous forme étanche et contenir l'huile destinée aux roulements. La lubrification de ceux-ci s'effectue préférablement comme suit:

Il convient tout d'abord de remarquer que les roulements du genre détaillé en fig. 2, c'est-à-dire propres à supporter une charge axiale unidirectionnelle, se comportent quelque peu à la façon de pompes en ce sens que si on les fait tourner dans un bain d'huile, leur asymétrie par rapport à un plan transversal moyen fait qu'ils tendent à déplacer le liquide longitudinalement en direction du côté à plus grand diamètre intérieur de leur bague extérieure.

Dans la forme d'exécution représentée l'huile arrive par une canalisation d'alimentation 38 à l'intérieur d'un chapeau 39 rapporté sur le corps supérieur 9 par des vis 40. Un passage 39a amène l'huile au-dessus du roulement supérieur 4. Toutefois le chapeau 39 comporte sur sa face inférieure une dépression 39b qui communique avec un ou plusieurs canaux 9a percés dans l'épaisseur du corps 9 et qui aboutissent dans une gorge 9b située en face de l'entretoise 11, laquelle est perforée radialement comme indiqué en 11a. L'huile peut ainsi parvenir à l'espace 12 situé entre les roulements 5 et 6, et délimité d'une part par la périphérie de l'arbre 3 formant paroi intérieure, d'autre part par les prolongements 10b, 33b et la gaine 34 dont l'ensemble constitue paroi extérieure.

On comprend qu'en raison de l'effet de pompe des roulements, l'huile qui débouche des perforations 11a est déplacée en partie vers le haut par les roulements 4, 5 et en partie vers le bas par le roulement 6, comme indiqué par les flèches. La fraction qui a traversé ce roulement 6 descend dans l'espace 12 pour arriver au corps inférieur 26. Pour le cas où l'espace 12 se serait pas continu ou comporterait un obstacle quelconque, on peut prévoir une canalisation de raccordement extérieure 42 reliant des passages respectifs 10c et 33c des brides 10 e 33, cette canalisation étant bien entendu suffisamment flexible pour ne pas rigidifier le boîtier précité 9—10b—34—33b—26.

Le passage 33c est réalisé sous la forme d'une dépression qui communique avec un ou plusieurs canaux 26a percés dans l'épaisseur du corps 26 et qui aboutissent dans une gorge 26b en face de laquelle s'ouvrent des perforations 27a de l'entretoise 27. On retrouve une disposition semblable à celle prévue pour le corps supérieur 9. Là encore l'huile qui arrive ainsi entre les roulements 18 et 19 circule dans le sens des flèches. La fraction renvoyée vers le bas arrive dans une gorge collectrice 28b de la bride inférieure 28, cette gorge comportant un débouché tangentiel 28c qu'une canalisation de retour appropriée 43 relie à l'entrée d'une pompe 44. Le refoulement de cette dernière est relié de son côté à la canalisation d'alimentation 38. Pour ne pas surcharger inutilement le dessin, le débouché 28c, la canalisation de retour 43, la pompe 44 et une partie de la canalisation d'alimentation 42 n'ont été représentés que de façon très schématisée.

On comprend qu'avec la disposition qu'on vient de décrire la lubrification de tous les roulements est assurée de façon parfaite en dépit de l'effet de pompe qu'ils comportent.

## Revendications

1. Dispositif pour supporter à rotation l'arbre (3) d'une centrifugeuse, du genre comprenant deux roulements ou groupes de roulements (4, 5, 6; 18, 19) situés à une certaine distance axiale l'un de l'autre, chacun étant monté rigidement dans un corps élémentaire (9, 26) non tournant relié élastiquement (14, 30) au bâti fixe (1, 2) de la machine, tandis qu'il est ménagé entre ces deux roulements ou groupes de roulements un espace annulaire (12) propre à former chambre à huile, cette chambre étant délimitée extérieurement par une paroi substantiellement cylindrique (10b, 34, 33b) aux extrémités de laquelle sont montés lesdits roulements ou groupes de roulements, caractérisé en ce que les deux corps élémentaires (9, 26) dans lesquels sont ainsi montés les roulements ou groupes de roulements (4, 5, 6; 18, 19) sont indépendants l'un de l'autre et en ce que chacun d'eux comporte un prolongement tubulaire (10b; 33b) qui s'étend en direction de l'autre corps, ces deux prolongements étant reliés l'un à l'autre de façon etanche par une gaine déformable (34) de façon à constituer la paroi extérieure fixe de la chambre à huile (12) dont la paroi intérieure tournante est directement réalisée par la périphérie de l'arbre (3) lui-même.

2. Dispositif suivant la revendication 1, destiné à une centrifugeuse à arbre (3) substantiellement vertical, caractérisé en ce que le corps élémentaire supérieur (9) est monté élastiquement sur une première couronne (15) qui repose librement sur l'embase du bâti (1), par l'intermédiaire de pieds ou colonnes (17), des moyens (16, 16a) étant prévus pour la centrer sur celui-ci, tandis que le corps élémenaire inférieur (26) est monté élastiquement sur une seconde couronne (31) directement disposée sur cette embase (1).

3. Dispositif suivant la revendication 2, caractérisé en ce que les moyens de centrage de la première couronne (15) comprennent un manchon vertical (2) rigidement solidaire de l'embase (1) du bâti et des vis radiales (16) avec contre-écrous (16a) propres à venir porter contre la périphérie de cette première couronne (15).

4. Dispositif suivant l'une quelconque des revendications qui précèdent, dans lequel chaque groupe de roulements (4, 5, 6; 18, 19) comprend au moins un premier de ceux-ci (4, 5; 18) propre à supporter une charge axiale dans un sens et un second (6; 19) propre à supporter une telle charge dans l'autre sens, caractérisé en ce qu'il y est prévu dans chaque corps élémentaire (9, 26) au moins un canal (9a; 26a) qui communique avec un espace séparant les deux genres de roulements de manière que sous l'action de l'effet de pompage qu'exercent de tels roulements, l'huile puisse circule en les traversant de part en part dans le sens correspondant à cet effet.

5. Dispositif suivant la revendication 4, caractérisé en ce que l'huile est amenée dans l'un (9) des corps élémentaires et s'écoule de là vers le second (26) au moins en partie à travers l'espace annulaire fermé (12) prévu autour de l'arbre (3).

6. Dispositif suivant l'une quelconque des revendications qui précèdent, avec poulie d'entraînement montée sur l'extrémité de l'arbre opposée au bol ou panier, caractérisé en ce que l'embase (1) du bâti sur laquelle repose l'ensemble des deux corps élémentaires (9, 26) est percée d'une ouverture de diamètre supérieur à celui de la poulie (23), de façon qu'il ne soit pas nécessaire de démonter celle-ci quand on désire enlever par le haut l'ensemble de la partie tournante et de la pivoterie dans laquelle elle est montée à rotation.

**Patentansprüche**

1. Vorrichtung zum Aufrechterhalten der Drehung eine Zentrifugenwelle (3) mit zwei Lagern oder Lagergruppen (4, 5, 6; 18, 19) in einem bestimmten Abstand voneinander, wobei jedes fest in nichtdrehenden Elementarkörper (9, 26) montiert ist, der elastisch (14, 30) mit dem festen Gehäuse (1, 2) der Maschine verbunden ist, während zwischen diesen beiden Lagern oder Lagergruppen ein ringförmiger Raum (12) vorgesehen ist, der zur Bildung einer Ölkammer geeignet ist, wobei diese Kammer nach außen von einer im wesentlichen zylindrischen Wand (10b, 34, 33b) abgegrenzt ist, an deren Enden die besagten Lager oder Lagergruppen angebracht sind, dadurch gekennzeichnet, daß die beiden Elementarkörper (9, 26), in denen die Lager oder Lagergruppen auf diese Weise angebracht sind (4, 5, 6; 18, 19), unabhängig voneinander sind und daß jeder von ihnen eine ringförmige Verlängerung (10b; 33b), die sich in Richtung zum anderen Körper erstreckt, trägt, wobei diese beiden Verlängerungen miteinander in dichter Weise über eine deformierbare Hülse (34) derart verbunden sind, daß die Außenwand der Ölkammer (12) entsteht, deren innere, drehende Wand direkt durch die Peripherie der Welle (3) selbst realisiert wird.

2. Vorrichtung nach Anspruch 1, bestimmt für eine Zentrifuge mit einer im wesentlichen vertikalen Welle (3), dadurch gekennzeichnet, daß der obere Elementarkörper (9) elastisch auf einem ersten Kranz (15) angebracht ist, der frei über dazwischenliegende Füße oder Säulen (17) auf dem Sockel des Gehäuses (1) ruht, wobei Mittel (16, 16a) für die Zentrierung auf demselben vorgesehen sind, während der untere Elementarkörper (26) elastisch auf einem zweiten Kranz (31) direkt auf besagtem Sockel (1) angebracht ist.

3. Vorrichtung nach Anspruch 2, dadurch gekennzeichnet, daß die Zentriermittel des ersten Kranzes (15) eine vertikale, fest mit dem Sockel (1) des Gehäuses verbundene Hülse (2) sowie radiale Schrauben (16) mit Kontermuttern (16a) umfassen, die zur Anlage an der Peripherie dieses ersten Kranzes kommen können.

4. Vorrichtung nach einem der vorhergehenden Ansprüche, bei der jede Lagergruppe (4, 5, 6; 18, 19) wenigstens eine erste Lagergruppe (4, 5; 18), geeignet zum Tragen einer axialen Last in einem Drehsinn, sowie eine zweite Lagergruppe (6; 19), geeignet zum Tragen einer derartigen Last im anderen Drehsinn, dadurch gekennzeichnet, daß in jedem Elementarkörper (9, 26) wenigstens ein Kanal (9a; 26a) vorgesehen ist, der mit einem die beiden Typen von Lagern trennenden Raum derart in Verbindung steht, daß unter Wirkung des Pumpeffektes durch diese Lager das Öl zirkulieren kann, indem es durch sie im diesem Effekt entsprechenden Drehsinn hindurchtritt.

5. Vorrichtung nach Anspruch 4, dadurch gekennzeichnet, daß das Öl durch einen (9) der Elementarkörper zugeführt wird und daß es von da zum zweiten (26) abfließt, wobei es zumindest teilweise durch den vorgesehenen ringförmigen und abgeschlossenen Raum (12) um die Welle (3) fließt.

6. Vorrichtung nach einem der vorhergehenden Ansprüche, mit einer am Ende der Welle angebrachten Antriebsscheibe, dadurch gekennzeichnet, daß der Sockel (1) des Gehäuses, auf dem das System der Elementarkörper ruht, von einer Öffnung mit einem größeren Durchmesser als die Scheibe (23) durchbohrt ist, so daß es nicht notwendig ist, diese zu demonstrieren, wenn man das Drehsystem und die Traglager, in denen sie drehbar angebracht ist, nach oben abnehmen möchte.

**Claims**

1. Device to support the rotating shaft (3) of a centrifugal machine, of the type comprising two bearings or groups of bearings (4, 5, 6; 18, 19) situated at a certain axial distance one from the other, each being mounted rigidly in a non-rotating elementary body (9, 26) which is joined elastically (14, 30) to the fixed frame (1, 2) of the machine, an annular space (12) being arranged between these two bearings or groups of bearings, which space is able to form an oil chamber, this chamber being delimited on the exterior by a substantially cylindrical wall (10b, 34, 33b) at the ends of which the bearings or groups of bearings are mounted, characterized in that the two elementary bodies (9, 26) which mount the bearings or groups of bearings (4, 5, 6; 18, 19) are independent one from the other and in that each of them comprises a tubular extension (10b; 33b) which extends towards the other body, these two extensions being connected one to the other in a tight manner by a deformable casing (34) so as to constitute the fixed exterior wall of the oil chamber (12), the inner rotating wall of which is directly realized by the periphery of the shaft (3) itself.

2. Device as claimed in Claim 1, intended for a centrifugal machine with a substantially vertical shaft (3), characterized in that the upper elementary body (9) is mounted elastically on a first crown (15) which rests freely on the base of the frame (1) by means of feet or columns (17), means (16, 16a) being provided to centre it thereon, whilst the lower elementary body (26) is mounted elastically on a second crown (31) arranged directly on the base (1).

3. Device as claimed in Claim 2, characterized in that the centering means of the first crown (15) comprises a vertical sleeve (2) which is rigidly fixed to the base (1) of the frame, and radial screws (16) with lock-nuts (16a) suitable for bearing against the periphery of the first crown (15).

4. Device as claimed in any one of the preceding claims, in which each group of bearings (4, 5, 6; 18, 19) comprises at least a first one of the latter (4, 5; 18) able to withstand an axial load in one direction and a second (6; 19) able to withstand such a load in the other direction, characterized in that in each elementary body (9, 26) at least one channel (9a; 26a) is provided which communicates with the space separating the two types of bearing such that under the action of the pumping effect which such bearings exert, the oil can circulate crossing through them in the direction corresponding to this effect.

5. Device as claimed in Claim 4, characterized in that the oil is brought into one (9) of the elementary bodies and flows there to the second (26) at least partially through the annular closed space (12) which is provided around the shaft (3).

6. Device as claimed in any of the preceding claims, with a driving pulley mounted on the end of the shaft opposite a bowl or basket, characterized in that the base (1) of the frame on which the assembly of the two elementary bodies (9, 26) rests is pierced by an opening of a greater diameter than that of the pulley (23), such that it is not necessary to dismantle the latter when one wishes to lift the assembly up from the rotating part and from the pivoting section in which it is rotatably mounted.

Fig. 1

0 054 502

*Fig. 2*

9 .